# EUROPEAN PATENT APPLICATION

(11) **EP 4 147 795 A1**
(43) Date of publication of application: **15.03.2023**
(21) Application number: 22191290.0
(22) Date of filing: 19.08.2022
(51) Int. Cl.: B05D 7/00, C09D 5/22, G01N 21/62, C09D 5/00

(54) **MONITORING LOW ICE ADHESION COATINGS**

(30) Priority: 13.09.2021 US 202117473493
(71) Applicant: Goodrich Corporation, Charlotte, NC 28217-4578 (US)
(72) Inventor: SLANE, Casey, Richwood, 43344 (US); BOTURA, Galdemir Cezar, Akron, 44313 (US)
(74) Representative: Dehns

(57) **Abstract**

The present invention is directed to a coated substrate (100) including a substrate (110) that is part of an aerospace, a wind turbine, or a marine structure; and an exterior coating (130) on the substrate, the exterior coating including an icephobic or a low ice adhesion composition including an indicator (112) that is an additive that is detectable or measurable as the exterior coating wears; wherein the indicator (112) provides indicia of wear of the exterior coating; and a method of inspecting the exterior coating on the substrate.

## Description

### BACKGROUND

Described herein is a coated substrate including an exterior coating that provides indicia of wear, more particularly, the coated substrate with an exterior coating that is a part of an aerospace, a marine structure, or a wind turbine, wherein the exterior coating includes an indicator that provides indicia of wear of the exterior coating.

Icing is a common phenomenon in subzero climate conditions where water and/or moisture are present. Ice build-up on aerospace, wind turbines, or marine structures affects performance and can be a major safety hazard. For example, ice build-up on aircrafts results in increased drag and may lead to loss of lift force, increased drag, and potentially catastrophic events. It is therefore desirable to limit the amount of ice that is allowed to accumulate on these structures to maintain their efficiency and safety. Icephobic exterior coatings on exterior surfaces of aerospace, wind turbines, and marine structures play an important role in preventing ice accumulation to an unacceptable level. The exterior coatings should exhibit suitable adhesion to the substrate, suitable wear resistance, minimal ultraviolet light-induced degradation, adequate elongation/flexibility, and resistance to crazing when exposed to acids and other chemicals used in aircraft cleaning and maintenance. Also, the coatings should be reliable and have some means to warn the flight or maintenance crews when they are degraded and no longer effective.

### BRIEF DESCRIPTION

Disclosed is a coated substrate including a substrate that is part of an aerospace, a marine structure, or a wind turbine; and an exterior coating on the substrate, the exterior coating including an icephobic or a low ice adhesion composition including an indicator that is an additive that is detectable or measurable as the exterior coating wears; wherein the indicator provides indicia of wear of the exterior coating.

In some aspects, the indicator is an indicator integrated into the exterior coating, an indicator applied as a part of the exterior coating, an indicator inherent to the exterior coating, or a combination thereof.

In any one or combination of the foregoing aspects, the indicator is a base layer of a different property than that of a top layer that becomes visually distinguishable on exposure to light, air, heat, moisture, or a combination thereof.

In any one or combination of the foregoing aspects, the aerospace or marine structure is an aircraft, a submarine, a spacecraft, or a missile.

In any one or combination of the foregoing aspects, the exterior coating includes a first applied coating layer and a second applied coating layer.

In any one or combination of the foregoing aspects, the first applied coating layer includes a primer, a low ice adhesion material, the indicator, or a combination thereof.

In any one or combination of the foregoing aspects, the second applied coating layer includes a low ice adhesion material.

In any one or combination of the foregoing aspects, the additive includes a chromophore that reflects a wavelength of visible light.

Also disclosed is a coated substrate including a substrate that is part of an aerospace, a wind turbine, or a marine structure; and an exterior coating on the substrate, the substrate or the exterior coating including an indicator that is detectable or measurable as the exterior coating wears; wherein the indicator provides indicia of wear of the exterior coating.

In any one or combination of the foregoing aspects, the indicator is an indicator integrated into the exterior coating or the substrate, an indicator applied as a part of the exterior coating, an indicator inherent to the exterior coating, an indicator applied as a part of the substrate, an indicator inherent to the substrate, or a combination thereof.

In any one or combination of the foregoing aspects, the indicator is a base layer of a different property than that of a top layer that becomes visually distinguishable on exposure to light, air, heat, moisture, or a combination thereof.

In any one or combination of the foregoing aspects, the aerospace or marine structure is an aircraft, a submarine, a spacecraft, or a missile.

In any one or combination of the foregoing aspects, the exterior coating includes a first applied coating layer and a second applied coating layer.

In any one or combination of the foregoing aspects, the first applied coating layer includes a primer, a low ice adhesion material, the indicator, or a combination thereof.

In any one or combination of the foregoing aspects, the second applied coating layer includes a low ice adhesion material.

Also disclosed is a method of inspecting an exterior coating on a substrate, the method including visually examining the exterior coating, the exterior coating including an icephobic composition including an indicator that is an additive that is detectable or measurable as the exterior coating wears; and determining, based on the indicator, weather the substrate requires maintenance, replacement, or repair for the exterior coating.

In any one or combination of the foregoing aspects, the substrate is part of an aerospace, a wind turbine, or a marine structure.

In any one or combination of the foregoing aspects, the indicator is an indicator integrated into the exterior coating, an indicator applied as a part of the exterior coating, an indicator inherent to the exterior coating, or a combination thereof.

In any one or combination of the foregoing aspects, the exterior coating includes a first applied coating layer and a second applied coating layer.

In any one or combination of the foregoing aspects, the first applied coating layer includes a primer, a low ice adhesion material, the indicator, or a combination thereof, and the second applied coating layer includes a low ice adhesion material.

Additional features and advantages are realized through the techniques of the present disclosure. Other embodiments and aspects of the disclosure are described in detail herein and are considered a part of the claimed disclosure. For a better understanding of the disclosure with the advantages and the features, refer to the description and to the drawings.

### BRIEF DESCRIPTION OF THE DRAWINGS

The following descriptions should not be considered limiting in any way. With reference to the accompanying drawings, like elements are numbered alike:
FIG. 1 is an exploded view a coated substrate according to embodiments of the present disclosure;
FIG. 2 is an exploded view a coated substrate according to some other embodiments of the present disclosure;
FIG. 3 is an exploded view a coated substrate according to embodiments of the present disclosure;
FIG. 4 is an exploded view a coated substrate according to embodiments of the present disclosure; and
FIG. 5 shows pictures of actual samples of rain erosion of coated substrates according to embodiments of the present disclosure.

### DETAILED DESCRIPTION

Coatings on exterior surfaces of aerospace, marine, and wind turbine structures and surfaces are susceptible to harsh environmental conditions, and due to this exposure, their performance can diminish over time. In particular, low ice adhesion or icephobic coatings intended to reduce ice accretion, runback ice, and/or provide any other performance benefit for the aircraft or its ice protection system are important for the safety and operation of the aircraft. Having the ability to monitor and diagnose the health of these types of coatings as they wear overtime is critical to ensure the effectiveness of the coated surface. Current available technologies focus on the ice adhesion and icephobicity properties of the coatings, but do not provide a solution to indicate or monitor the health of exterior coatings.

Indicators are used in many other industries to provide users with feedback on properties such as curing, corrosion, temperature, etc. Accordingly, disclosed herein are embodiments of a coated substrate including a substrate that is part of an aerospace or marine structure; and an exterior coating on the substrate, the exterior coating includes an icephobic composition including an indicator that is an additive that is detectable or measurable as the exterior coating wears; wherein the indicator provides indicia of wear of the exterior coating. Also disclosed is a method to inspect and monitor the health of these coatings to more accurately predict maintenance and repair as well as drastically improve the safety, all-in-all decreasing the total operating cost and increasing safety of these materials

A detailed description of one or more embodiments of the disclosed apparatus and method are presented herein by way of exemplification and not limitation with reference to the Figures. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items.

It will be understood that when an element is referred to as being "on" another element, it can be directly in contact with the other element or intervening elements may be present therebetween. In contrast, when an element is referred to as being "directly on" another element, there are no intervening elements present. Expressions such as "at least one", "at least one kind", "one or more kinds", or "one or more" when preceding a list of elements, modify the entire list of elements and do not modify the individual elements of the list. As used herein, the term "combination thereof" is used to refer to a mixture or alloy of two or more components described above.

As used herein, the term "including" is used to indicate that other components may be added or/and interposed, rather than excluding other components, unless specifically stated to the contrary. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

As used herein, the term "first", "second", or the like do not indicate order, quantity, or importance, and are used to distinguish one element from another. It will be understood that, although the terms first, second, third etc. may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section discussed below could be termed a second element, component, region, layer, or section without departing from the teachings of the present embodiments.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Throughout the present specification, "an embodiment", "example embodiment", "exemplary embodiment", etc. are included in at least one embodiment in which specific elements described in connection with the embodiment are included in this specification, which means that these elements may or may not exist in another embodiment. Further, it should be understood that the described elements may be combined in any suitable manner in various embodiments.

Unless otherwise defined, all terms including technical and scientific terms used herein have the same meaning as commonly understood by one of ordinary skill in the art to which this disclosure belongs. All cited patents, patent applications and other references are incorporated herein by reference in their entirety. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein. However, if the terms in this specification contradict or conflict with the terms of the incorporated references, the terms from this specification take precedence over the conflicting terms in the incorporated reference.

While specific embodiments and implementations have been described, alternatives, modifications, variations, improvements, and substantive equivalents that are currently unexpected or unforeseeable may occur to applicants or those skilled in the art. Accordingly, the appended claims and amendments are intended to include all such alternatives, modifications, improvements and substantial equivalents.

The present disclosure is directed to a coated substrate including a substrate that is part of an aerospace, a marine structure, or a wind turbine; and an exterior coating on the substrate, wherein the exterior coating includes an ice phobic or a low ice adhesion composition including an indicator that is an additive that is detectable or measurable as the exterior coating wears; and wherein the indicator provides indicia of wear of the exterior coating.

Icephobicity generally refers to the ability of a solid surface to repel ice or prevent ice formation. Icephobic surfaces are characterized with four main figures of merit: (1) median ice nucleation temperature, T_{N} defined as ice nucleation temperature of a sessile water droplet placed on a surface when the system of droplet, surface and surrounding is cooled in a slow and quasi-equilibrium approach or average ice nucleation delay time, τₐᵥ, defined as the average time required for ice nucleation of a super-cooled droplet on a surface in thermal equilibrium with its surrounding, (2) ice accretion rate on a surface, (3) adhesion strength at the ice-solid interface, and (4) long-term icephobicity of a surface (Irajizad, P., et al., Icephobic surfaces: Definition and figures of merit, Adv. Colloid Interface Sci., 269 (2019), pp. 203-218).

Low ice adhesion generally refers to an ice adhesion strength less than about 130 kilopascals (kPa). For example, the low ice adhesion composition has the ice adhesion strength of about or in any range between, 129.9, 125, 120, 115, 110, 105, 100, 95, 90, 85, 80, 75, 70, 65, 60, 55, 50, 45, 40, 35, 30, 25, 20, 15, 10, and 5 kPa. For example, the low ice adhesion composition has the ice adhesion strength in any range of about 5 kPa to about 129 kPa, about 5 kPa to about 125 kPa, about 5 kPa to about 120 kPa, about 5 kPa to about 110 kPa, about 5 kPa to about 100 kPa, about 5 kPa to about 90 kPa, about 5 kPa to about 80 kPa, about 5 kPa to about 70 kPa, about 5 kPa to about 60 kPa, about 5 kPa to about 50 kPa, about 5 kPa to about 40 kPa, about 5 kPa to about 30 kPa, about 5 kPa to about 20 kPa, about 5 kPa to about 10 kPa, about 10 kPa to about 129 kPa, about 20 kPa to about 129 kPa, about 30 kPa to about 129 kPa, about 40 kPa to about 129 kPa, about 50 kPa to about 129 kPa, about 60 kPa to about 129 kPa, about 70 kPa to about 129 kPa, about 80 kPa to about 129 kPa, about 90 kPa to about 129 kPa, about 100 kPa to about 129 kPa, about 110 kPa to about 129 kPa, or about 120 kPa to about 129 kPa.

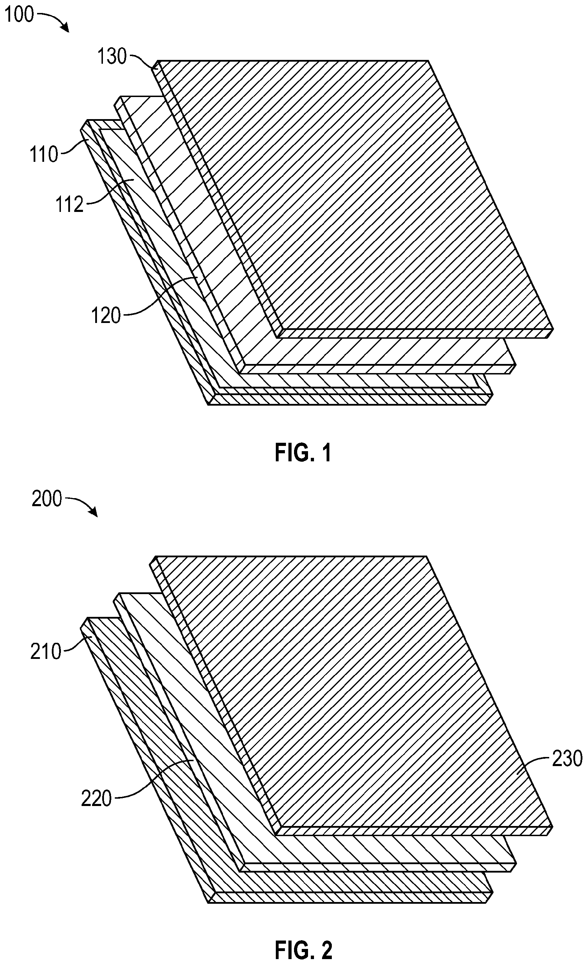

FIG. 1 shows an exploded view of a coated substrate 100 according to some embodiments of the present disclosure. The coated substrate 100 includes a substrate 110 with a high contrast indicator 112 is a part of an aerospace or marine structure. The substrate 110 with a high contrast indicator 112 is optionally coated with a primer 120. The substrate 110 (without the primer), or the substrate 110 with the primer coating 120 is coated with an icephobic coating 130 (also referred as an icephobic composition). As the icephobic coating 130 wears, it exposes the primer 120 and the underlying substrate 110 with the high contrast indicator 112, or the substrate 110 with the high contrast indicator 112 (if primer 120 is absent) indicating wear of the icephobic coating 130 and that a maintenance is due.

FIG. 2 shows an exploded view of a coated substrate 200 according to some other embodiments of the present disclosure. The coated substrate 200 includes a substrate 210 that is a part of an aerospace or marine structure. The substrate 210 is coated with a high contrast indicator primer 220. The substrate 210 with the high contrast indicator primer 220 is coated with an icephobic coating 230 (also referred as an icephobic composition or a low ice adhesion composition). As the icephobic coating 230 wears it exposes the high contrast indicator primer 220 indicating wear of the icephobic coating 230 and that a maintenance is due.

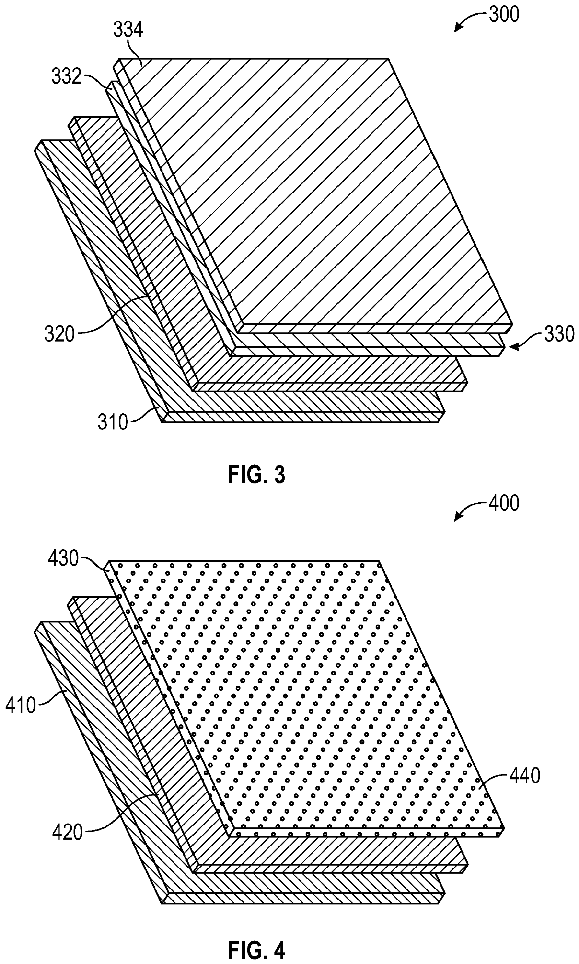

FIG. 3 shows an exploded view of a coated substrate 300 according to some embodiments of the present disclosure. The coated substrate includes a substrate 310 that is a part of an aerospace or marine structure. The substrate 310 is optionally coated with a primer 320. The substrate 310, or the substrate 310 with the optionally coated primer 320 layer is then coated with a bi-layer icephobic coating 330 including two layers (also referred as an icephobic composition), including a top standard icephobic layer 334, and a bottom high contrast icephobic layer 332. As the top standard icephobic layer 334 wears it exposes the bottom high contrast icephobic layer 332 indicating wear of the top standard icephobic coating 334 and that a maintenance is due.

FIG. 4 shows an exploded view a coated substrate 400 according to some embodiments of the present disclosure. The coated substrate includes a substrate 410 is a part of an aerospace or marine structure. The substrate 410 is optionally coated with a primer 420. The substrate 410 (without the primer), or the substrate 410 with the primer coating 420 is coated with an icephobic coating 430 with a wear indicating additive 440 (together also referred as an icephobic composition). As the icephobic coating 430 with the wear indicating additive 440 wears it exposes the wear indicating additive 440 indicating wear of the icephobic coating 430 and that a maintenance is due.

As shown in FIG. 1 to FIG. 4, exposing of the wear indicating additive or the high contrast indicator is one way of detecting the wear of the icephobic coating. In one or more embodiments, the health of the icephobic coating can be measured/monitored via the presence or remains of the wear of the additive. Any suitable instrumentation can be used to measure/monitor a designed characteristic of the wear additive that would diminish as the coating erodes. For example, if the wear additive was electrically conductive, eddy current could be used to measure the conductance of the material, and as more additive was removed the conductance would change indicating the status of the wear additive. Other suitable properties could be utilized as long as a strong enough correlation with wear/life could be established. Preferably, the process would be non-evasive and as easy as possible to conduct for operators. The wear additive used is any suitable wear additive not significantly diminishing the base properties of the coating.

In one or more embodiments, a coated substrate including a substrate that is part of an aerospace, a marine structure, or a wind turbine; and an exterior coating on the substrate, the exterior coating including an icephobic or a low ice adhesion composition including an indicator that is an additive that is detectable or measurable as the exterior coating wears; wherein the indicator provides indicia of wear of the exterior coating. In some embodiments, the substrate is a metal, an alloy, or a combination thereof. The exterior coating has a thickness of at least 1 micron. For example, the exterior coating has a thickness of about 1 micron to about 100 microns, 1 micron to about 90 microns, 1 micron to about 80 microns, 1 micron to about 70 microns, 1 micron to about 60 microns, 1 micron to about 50 microns, 1 micron to about 40 microns, 1 micron to about 30 microns, 1 micron to about 20 microns, 1 micron to about 10 microns, or 1 micron to about 5 microns. When the exterior coating is in the above mentioned range it provides an improved icephobicity and way of detecting wear of the exterior coating.

The indicator is a color indicator having a different color than a top layer, or it can be any suitable compound or composition with a different property than that of the top layer that becomes visually distinguishable on exposure to light, air, heat, moisture, or a combination thereof. For example, the indicator is any suitable high contrast indicator, any suitable wear indicating additive, or a combination thereof. The icephobic or a low ice adhesion composition or the icephobic coating includes any suitable low ice adhesion (herein also referred as icephobic) material, nonlimiting examples of low ice adhesion materials include multiscale crack initiator promoted super-low ice adhesion surfaces, Slippery Liquid-Infused Nanostructured Surfaces (SLIPS), HygraTek^{®}, HybridShield^{®} by NanoSonic ice phobic coatings, PPG IcePhobic Coating, NANOMYTE^{®} SuperAi by NEI Corporation, ceramic nitrides and carbides, or other suitable materials/coatings with the low ice adhesion material. In one or more embodiments, the icephobic coating may include polydimethylsiloxane (PDMS), at least one of nanoscale amorphous silica and super hydrophobic nanoparticles, and at least one of a non-reactive hydrophobic additive and a non-reactive hydrophilic additive. In some embodiments, the coating may further include fluoride. The icephobic composition layer has a thickness of at least 1 microns. For example, the icephobic composition layer has a thickness of about 1 micron to about 100 microns, 1 micron to about 90 microns, 1 micron to about 80 microns, 1 micron to about 70 microns, 1 micron to about 60 microns, 1 micron to about 50 microns, 1 micron to about 40 microns, 1 micron to about 30 microns, 1 micron to about 20 microns, 1 micron to about 10 microns, or 1 micron to about 5 microns.

In some other embodiments, the indicator is an indicator integrated into the exterior coating, an indicator applied as a part of the exterior coating, an indicator inherent to the exterior coating, or a combination thereof. In yet some other embodiments, the indicator is a base layer of a different property than that of a top layer that becomes visually distinguishable on exposure to light, air, heat, moisture, or a combination thereof.

In one or more embodiments, the aerospace or marine structure (part of the substrate) is an aircraft, a submarine, a spacecraft, a wind turbine, or a missile. In some embodiments, the exterior coating includes a first applied coating layer and a second applied coating layer. In some embodiments, the first applied coating layer includes a primer, a low ice adhesion material, the indicator, or a combination thereof. In some other embodiments, the first applied coating layer comprises a primer whose composition is intended to promote adhesion between the second layer and the substrate. In some other embodiments, the first layer is the low ice adhesion material as described herein. In yet some other embodiments, the first applied coating layer includes the indicator, distinguishing it from the second applied layer. In some embodiments, the second applied coating layer comprises the low ice adhesion material as described herein.

In one or more embodiments, the additive includes a chromophore that reflects a wavelength of visible light. In some embodiments, the additive is any suitable material that has a distinct measurable or quantifiable characteristic or property, that changes as the coating wears/erodes in such a way to identify the operator. Preferably, the additive does not diminish the base properties of the coatings. In some other embodiments, the wear additive is electrically conductive, and eddy current could be used to measure the conductance of the material, and as the more additive is removed the conductance would change providing the indication for the wear. Other suitable examples for the additive include a light reflecting additive, a magnetic additive, a fluoresces additive, a color indicating additive, or a combination thereof.

In one or more embodiments, a coated substrate includes a substrate that is part of an aerospace, a marine structure, or a wind turbine; and an exterior coating on the substrate, the substrate or the exterior coating including an indicator that is detectable or measurable as the exterior coating wears; wherein the indicator provides indicia of wear of the exterior coating. In some embodiments, the indicator is an indicator integrated into the exterior coating or the substrate, an indicator applied as a part of the exterior coating, an indicator inherent to the exterior coating, an indicator applied as a part of the substrate, an indicator inherent to the substrate, or a combination thereof. In some other embodiments, the indicator is a base layer of a different property than that of a top layer that becomes visually distinguishable on exposure to light, air, heat, moisture, or a combination thereof.

In one or more embodiments, the aerospace or marine structure is an aircraft, a submarine, a spacecraft, or a missile. In some embodiments, the exterior coating comprises a first applied coating layer and a second applied coating layer. In some other embodiments, the first applied coating layer includes a primer, a low ice adhesion material, the indicator, or a combination thereof. In yet some other embodiments, the second applied coating layer includes a low ice adhesion material.

In one or more embodiments, a method of inspecting an exterior coating on a substrate, the method includes visually examining the exterior coating, the exterior coating comprising an icephobic composition comprising an indicator that is an additive that is detectable or measurable as the exterior coating wears; and determining, based on the indicator, weather the substrate requires maintenance, replacement, or repair for the exterior coating. Depending on an indication method, the inspection can be performed by a walk around the substrate with the exterior coating, during a routine maintenance, or by using any suitable test method. In some embodiments, the method of inspecting an exterior coating on a substrate includes a distinct color contrast between the coating layers and/or the substrate, and the coating is inspected during the pilot walk around the aircraft prior to flights. Depending on the type and composition of the exterior coating on the substrate, a predetermined wear specification/ requirement would be defined to assist in the process. For example, no wear/ defects larger than a US quarter are permitted for a flight that is expected to experience icing. In some other embodiments, the additive has a different property than the substrate or the icephobic coating as described herein, for example, an additive with electrical conductance, and routine schedule maintenance intervals are scheduled to detect the wear. Yet, in some other embodiments, instrumentation implacable to the additive's distinct property (for example, electrical conductance or eddy current) could be used to measure/quantify the life based on predetermined testing and validation.

The substrate to be inspected can be a part of an aerospace, a wind turbine, or a marine structure, for example, an aircraft, a space shuttle, a missile, a wind turbine, or a submarine. In some embodiments, the method of inspecting an exterior coating on the substrate includes the substrate that is part of an aerospace or marine structure, or a wind turbine. In some other embodiments, the method of inspecting an exterior coating on the substrate includes the indicator that is an indicator integrated into the exterior coating, an indicator applied as a part of the exterior coating, an indicator inherent to the exterior coating, or a combination thereof.

In one or more embodiments, the method of inspecting an exterior coating on the substrate includes inspecting the exterior coating with a first applied coating layer and a second applied coating layer. In some embodiments, the method of inspecting an exterior coating on the substrate includes inspecting the exterior coating with the first applied coating layer and the second applied coating layer, wherein the first applied coating layer includes a primer, a low ice adhesion material, the indicator, or a combination thereof, and the second applied coating layer includes a low ice adhesion material.

### EXAMPLES

### Comparative Example: Rain erosion study

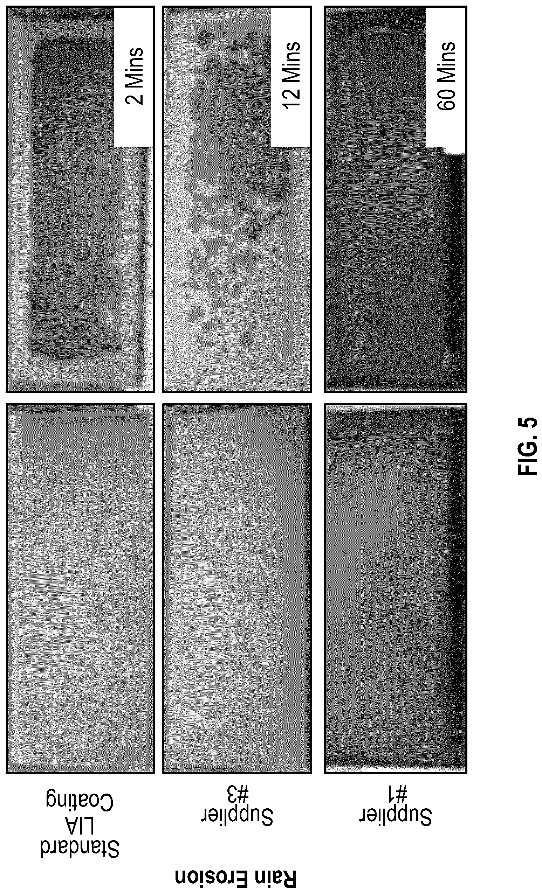

FIG. 5 shows a rain erosion study of coatings on a metal substrate without indicators (left) and corresponding rain exposed coatings (right) at 2, 12, and 60 minute time points. As shown, without significant contrast from an indicator as described herein, wear is difficult to identify.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A coated substrate (100) comprising:
a substrate (110) that is part of an aerospace, or a marine structure, or a wind turbine; and
an exterior coating (130) on the substrate, the exterior coating comprising an icephobic or a low ice adhesion composition comprising an indicator (112) that is an additive that is detectable or measurable as the exterior coating wears;
wherein the indicator (112) provides indicia of wear of the exterior coating.

2. The coated substrate of claim 1, wherein the indicator (112) is an indicator integrated into the exterior coating, an indicator applied as a part of the exterior coating, an indicator inherent to the exterior coating, or a combination thereof.

3. The coated substrate of claim 1 or 2, wherein the indicator (112) is a base layer of a different property than that of a top layer that becomes visually distinguishable on exposure to light, air, heat, moisture, or a combination thereof.

4. The coated substrate of any preceding claim, wherein the aerospace or marine structure is an aircraft, a submarine, a spacecraft, or a missile.

5. The coated substrate of any preceding claim, wherein the exterior coating (130) comprises a first applied coating layer and a second applied coating layer.

6. The coated substrate of claim 5, wherein the first applied coating layer comprises a primer, a low ice adhesion material, the indicator, or a combination thereof; and/or wherein the second applied coating layer comprises a low ice adhesion material.

7. The coated substrate of any preceding claim, wherein the additive comprises a chromophore that reflects a wavelength of visible light.

8. A coated substrate (100) comprising:
a substrate (110) that is part of an aerospace, a wind turbine, or marine structure; and
an exterior coating (130) on the substrate, the substrate or the exterior coating comprising an indicator (112) that is detectable or measurable as the exterior coating wears;
wherein the indicator (112) provides indicia of wear of the exterior coating.

9. The coated substrate of claim 8, wherein the indicator (112) is an indicator integrated into the exterior coating or the substrate, an indicator applied as a part of the exterior coating, an indicator inherent to the exterior coating, an indicator applied as a part of the substrate, an indicator inherent to the substrate, or a combination thereof; and/or wherein the indicator (112) is a base layer of a different property than that of a top layer that becomes visually distinguishable on exposure to light, air, heat, moisture, or a combination thereof.

10. The coated substrate of claim 8 or 9, wherein the aerospace or marine structure is an aircraft, a submarine, a spacecraft, or a missile.

11. The coated substrate of any of claims 8-10, wherein the exterior coating (130) comprises a first applied coating layer and a second applied coating layer.

12. The coated substrate of claim 11, wherein the first applied coating layer comprises a primer, a low ice adhesion material, the indicator, or a combination thereof; and/or wherein the second applied coating layer comprises a low ice adhesion material.

13. A method of inspecting an exterior coating on a substrate, the method comprising:
visually examining the exterior coating, the exterior coating comprising an icephobic composition comprising an indicator that is an additive that is detectable or measurable as the exterior coating wears; and
determining, based on the indicator, weather the substrate requires maintenance, replacement, or repair for the exterior coating.

14. The method of claim 13, wherein the substrate is part of an aerospace, a wind turbine, or a marine structure; and/or wherein the indicator is an indicator integrated into the exterior coating, an indicator applied as a part of the exterior coating, an indicator inherent to the exterior coating, or a combination thereof.

15. The method of claim 13 or 14, wherein the exterior coating comprises a first applied coating layer and a second applied coating layer, and preferably wherein the first applied coating layer comprises a primer, a low ice adhesion material, the indicator, or a combination thereof, and the second applied coating layer comprises a low ice adhesion material.
